# EUROPÄISCHE PATENTSCHRIFT

(11) **EP 3 650 199 B1**
(45) Veröffentlichungstag und Bekanntmachung des Hinweises auf die Patenterteilung: **11.11.2020**
(21) Anmeldenummer: 19199599.2
(22) Anmeldetag: 25.09.2019
(51) Int. Cl.: B29C 55/16

(54) **FOLIENRECKANLAGE**
FILM STRETCHING APPARATUS
INSTALLATION D'ÉTIREMENT DE FEUILLE

(30) Priorität: 30.10.2018 DE 102018127073
(43) Veröffentlichungstag der Anmeldung: 13.05.2020
(73) Patentinhaber: Brückner Maschinenbau GmbH & Co. KG, 83313 Siegsdorf (DE)
(72) Erfinder: Wettemann, Anton, 83377 Vachendorf (DE); Unterreiner, Markus, 83250 Marquartstein (DE); Adler, Jens, 83313 Siegsdorf (DE); Seibel, Stefan, 83435 Bad Reichenhall (DE); Giapoulis, Anthimos, 83278 Traunstein (DE)
(74) Vertreter: Flach Bauer Stahl Patentanwälte Partnerschaft mbB

(56) Entgegenhaltungen:
- EP-A1- 2 123 427
- WO-A1-2016/146383
- DE-C2- 3 616 328

## Beschreibung

Die Erfindung betrifft eine Folienreckanlage nach dem Oberbegriff des Anspruches 1.

Reckanlagen finden insbesondere bei der Kunststofffolienherstellung Anwendung. Bekannt sind so genannte Simultan-Reckanlagen, in welchen ein Kunststofffilm gleichzeitig in Quer- und Längsrichtung gereckt werden kann. Ebenso bekannt sind so genannte sequenzielle Reckanlagen, bei denen der Kunststofffilm in zwei aufeinanderfolgenden Stufen gereckt wird, beispielsweise zunächst in Längsrichtung und dann in Querrichtung (oder umgekehrt). Schließlich sind auch reine Längsreck- sowie reine Querreckanlagen bekannt.

Bekanntermaßen wird bei der Herstellung eines Kunststofffilms die zu reckende Materialbahn an den beiden gegenüberliegenden Filmrändern mittels Kluppen erfasst, die auf beiden Seiten der zu reckenden Materialbahn auf umlaufenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegende Kluppen auf den Führungsschienenabschnitten mit einer Querkomponente divergierend zur Transportrichtung voneinander weg bewegt werden) zu einer Auslaufzone und dann auf einem Rückweg wieder zur Einlaufzone verfahren, wobei die Folie der Reckzone nachgelagert in einer- oder in mehreren Behandlungszonen (Annealingzonen, Kühlzonen) beispielsweise noch einer gewissen Relaxation und/oder Wärmenachbehandlung üblicherweise unterzogen wird.

Der Kunststofffilm muss vor, während und nach dem eigentlichen Reckvorgang einer in den einzelnen Abschnitten unterschiedlichen Aufheiz- und bzw. Kühlphasen unterzogen werden. Von daher durchläuft die zu reckende Kunststofffolienbahn einen Ofen, der aufeinanderfolgend unterschiedliche Behandlungszonen (dazwischenliegend auch ggf. neutrale Zonen) aufweist. In diesen Behandlungszonen wird der herzustellende Kunststofffolienfilm nicht nur einer unterschiedlichen Wärmebehandlung unterzogen, sondern es muss vor allem auch eine Ofenluftversorgung vorgesehen sein, um den Ofeninnenraum der Reckanlage stets mit frischer Luft zu versorgen und die belastete Luft abzusaugen. Die zugeführte Frischluft wird dabei in der Regel vorgewärmt und gefiltert. Darüber hinaus muss aber auch die Abluft aus dem Ofen oder dem jeweiligen Ofenabschnitt herausgeführt werden, da während des Herstellungsprozesses der Kunststofffolie Folieninhaltstoffe verdampfen, die dann als Verunreinigungen vorhanden sind und sich z. B. wieder als unerwünschte Schadstoffe auf der Oberfläche der herzustellenden Kunststofffolie niederschlagen können. Es handelt sich dabei also um Folienbestandteile, welche bei der Reckung und bei dem Aufheizvorgang der Folie entstehen können, beispielsweise in Form von Polymeren, die sich dann beispielsweise auch während des Abkühlvorgangs der Folie kondensieren und auf der Folie niederschlagen können (daneben aber auch auf vielen im Innenraum der Behandlungszone befindliche Komponenten, worauf später noch eingegangen wird). Derartige Verunreinigungen der Folie werden aber in keinem Falle gewünscht.

Von daher gliedert sich ein Ofen für Reckanlagen in mehrere Behandlungszonen, denen jeweils separate Luftversorgungseinheiten zugeordnet sind. Je nach Anforderung können von daher also die Anzahl der benötigten Frischluft-/Abluftkreise und damit die Anzahl der erforderlichen Luftversorgungseinheiten für den Ofen variieren. Nachfolgend soll ein Beispiel für einen typischen Ofen für die Herstellung von BOPET-Filmen erläutert werden. Bei BOPET-Filmen handelt es sich um biaxial-orientierte PET-Filme, also Filme die in Maschinenlängsrichtung (MD-Richtung) und in Maschinen-Querrichtung (TD-Richtung) gestreckt werden. Ein hierfür typischer Ofen für die Herstellung derartiger vorstehend erläuterter BOPET-Filme kann beispielsweise in fünf (und mehr) Einheiten gegliedert sein, also beispielsweise in die Behandlungszonen
- Streckzone oder Vorheiz- und Streckzone
- Annealingzone
- erste Kühlzone
- zweite Kühlzone
- dritte Kühlzone
- und dazwischen ggf. Neutralzonen.

Grundsätzlich sind derartige Reckanlagen so aufgebaut, dass beispielsweise den vorstehend genannten Behandlungszonen jeweils eine Luftversorgungseinheit zugeordnet ist.

Derartige Luftversorgungseinheiten können beispielsweise aus einem wärmeisolierten Blechgehäuse bestehen, welches in einen Zuluft- und einen Abluftbereich unterteilt ist. In manchen Fällen kann die Luftversorgungseinheit auch nur einen Zuluftbereich zur Aufbereitung der zuzuführenden Luft umfassen, während der Abluftbereich durch einen freistehenden Ventilator realisiert wird.

Der Zuluftbereich kann dabei folgende Komponenten umfassen (wobei diese Komponenten nicht zwingend vorgesehen sein müssen):
- Filter
- Heizeinrichtung
- Kühleinrichtung
- Ventilator
- Massenstrommesseinrichtung
- weitere Sensoren und Aktoren

Die vorstehend genannten Komponenten können dabei für die jeweilige Versorgungseinheit vorgesehen sein, müssen es aber nicht. Genauso können zumindest bei einzelnen Behandlungszonen auch noch andere Komponenten hinzukommen.

Bei bekannten Anlagen besteht der Abluftbereich dann im Wesentlichen aus einem Ventilator und einer Massenstrom-messeinrichtung.

Um die Verunreinigungen aus dem jeweiligen Ofenraum sicher herausführen zu können besteht zwischen dem Zuluft und dem Abluftbereich in den jeweiligen Versorgungseinheiten keine Verbindung.

Der Aufbau ist dabei häufig derart, dass z. B. eine Luftversorgungseinheit einen Zuluftventilator umfasst, der Luft aus der Umgebung der Luftversorgungseinheit für den Reckofen oder von einem Bereich außerhalb eines Anlagengebäudes ansaugt, wobei die angesaugte Luft dann gefiltert und temperiert wird, bevor die entsprechend vorbehandelte und auf bestimmte Temperatur gebrachte Luft über den Zuluftventilator einen betreffenden Ofenbereich der Reckanlage zugeführt wird, also einer bestimmten Behandlungszone.

Viele vorbekannte Reckanlagen weisen dabei Öfen auf, in deren jeweiligen Behandlungszone innerhalb des betreffenden Ofenabschnittes eine entsprechende Luftmenge umgewälzt und nur stets in der Zeiteinheit ein geringerer Anteil an Frischluft oder Zuluft neu zugeführt und nur ein geringerer Anteil gleichzeitig von belasteter Luft abgeführt wird. So kann insbesondere in den Bereichen "Vorheizzone", "Streckzone" und "Annealingzone" beispielsweise nur ein kleiner Anteil von 10 % an Zuluft hinzugefügt werden, verglichen mit dem Umluftvolumen im Ofen. Sind beispielsweise drei Kühlzonen vorgesehen, so ist in vielen Fällen in der ersten und zweiten Kühlzone zwar ein höherer Anteil an neu zugeführter Luft eingestellt gewesen, wobei dieser Volumenanteil an neu zugeführter Luft in der Regel aber immer noch unter 50 % des Umluftvolumens im Ofen war.

In der letzten Behandlungszone ist bisher in der Regel eine Abwandlung insoweit zu den anderen Behandlungszonen vorgesehen gewesen, als die letzte oder beispielsweise dritte Kühlzone keinen Zuluftventilator aufweist, sondern die Zuluft lediglich vom Ofenventilator über die Ofenluftversorgungseinheit angesaugt wird. In dieser letzten Behandlungszone ist dann häufig ein 100%iger Luftaustausch vorgesehen gewesen, bei welchem die gesamte Luftmenge, die auf den Film geblasen wird, über die Ofenluftversorgungseinheit zugeführt wird, während die gesamte Abluft über den Abluftventilator abgesaugt und nach außen abgeführt wird.

Soweit Abluft auch in den anderen Zonen entfernt wird, so wird diese Abluft in der Regel über entsprechende Luftkanäle aus dem Anlagengebäude heraus ins Freie abgeführt. Sofern keine Einrichtungen für die Wärmerückgewinnung installiert waren, hat dies zur Folge gehabt, dass die in der Abwärme der Luft enthaltene Energie verloren war. Ein derartiger Aufbau erfordert einen hohen Energiebedarf. Denn obgleich beispielsweise in den Kühlzonen durch den dort abkühlenden Film ein Wärmeenergieeintrag stattfindet, müssen die Kühlzonen aufgrund des dort stattfindenden Luftaustausches beheizt werden.

Ein weiteres Problem bei Reckanlagen stellen die Polymere oder beispielsweise bei PET die Oligomere dar, also die bei dem Streck- und Wärmebehandlungsprozess im Ofen aus der Folie entweichende Kohlenwasserstoffe. In den Kühlzonen ist die Umlufttemperatur deutlich kälter als die Folientemperatur. Diese führt dazu, dass diese Oligomere kondensieren und in Form von weißen, leicht klebrigen Pulver an allen Ofeninnenflächen niederschlagen können. An den Stellen im Ofen, an denen die Kältezuluft aus der Ofenluftversorgung mit der Rückgesaugten und durch den Film erwärmten Umluft vermischt wird, entsteht eine Kondensatfalle. Denn die in der rückgesaugten Umluft enthaltenen Oligomere kondensieren aufgrund der Abkühlung verstärkt aus und schlagen sich an allen Ofeninnenflächen nieder. Dieses Resublimieren oder Kondensieren von aus dem Film entweichenden Belaststoffen führt dazu, dass die gesamte Anlage von Zeit zu Zeit abgeschaltet werden muss, um insbesondere die Kühlzonen zu reinigen.

Daher sind bereits verschiedene Methoden vorgeschlagen worden, um Verunreinigungen mit Oligomeren zu verhindern. In einem Fall ist versucht worden Kunststoffmaterialien für die Filmproduktion zu verwenden, die möglichst nur geringe Mengen von Oligomeren enthalten, also von in den Polymeren vorhandenen niedermolekularen Substanzen. Zudem ist versucht worden die Abscheidung von aus den Polymeren heraus sublimierten Oligomere auf die Folienoberfläche bei der Herstellung der Folie zu vermeiden oder zumindest zu verringern.

Demgemäß ist bereits in der DE 36 16 328 C2 vorgeschlagen worden erhitzte Luft, die im Wesentlichen keine Oligomere enthält, in einer getrennten Zone in der Querverstreckungszone und/oder der Thermofixzone unter Bildung eines Luftvorhangs in der Nähe der Trennwand der Zone in Bezug auf die Bewegungsrichtung der Folie aus die Stromabwärts gelegene Seite der Folie zu blasen, und zwar in Breitenrichtung über die Oberfläche der Folie, wobei diese Luft dann über einen Strom aufwärts des Luftzuführbereichs gelegenen Abziehbereich abgezogen werden soll.

Gemäß der WO 2016/146383 A1 ist demgegenüber vorgeschlagen worden
a) ein Behandlungsfluid in jeder Behandlungszone umzuwälzen und lediglich einen Teil des Behandlungsfluids von der jeweilige Behandlungszone zur prozesstechnisch nachfolgenden Behandlungszone zu führen,
b) wobei das Überführen dieses Teils des Behandlungsfluids in eine prozesstechnisch nachfolgende Behandlungszone über einen Bypass parallel zur Transportstrecke des durch den Ofen fortbewegten Kunststofffilms erfolgen soll, und
c) wobei in einer jeweiligen Behandlungszone ein Wärmetauscher installiert ist, mittels welchem der zugeführte Teil des Behandlungsfluids an die in dieser Behandlungszone prozesstechnisch zur thermischen Behandlung der Folie erforderlichen Temperatur angepasst werden soll.

Eine weitere Verbesserung soll dadurch erzielt werden, dass unabhängig von dem vorstehend erläuterten Weiterleiten eines Teils des Behandlungsfluids aus von einer Behandlungszone in eine nächste, d. h. in Abzugsrichtung der Kunststofffolie (nach dem "Gleichstromprinzip"), bezüglich der letzten Behandlungszone eine Umkehrung insoweit zu realisieren, als ein Teil des daraus abgezogenen Behandlungsfluids in mehrere prozesstechnisch vorgelagerte Behandlungszone befördert wird, und zwar derart, dass das Behandlungsfluid von der letzten Behandlungszone zunächst in die vorletzte Behandlungszone und dann von der vorletzten Behandlungszone in eine vorvorletzte Behandlungszone usw. nach dem "Gegenstromprinzip" weitergeleitet wird. Dort wo das nach dem "Gleichstromprinzip" den mehreren Behandlungszonen zugeführte Behandlungsfluid mit den von der letzten Behandlungszone über mehrere Stufen im "Gegenstromprinzip" weitergeleitete Behandlungsfluid zusammentrifft, werden beide Fluidströme über eine dort vorgesehene vereinigte Entnahmestelle zum Abführen aus dem Ofen herausgeführt.

Vor diesem Hintergrund ist es Aufgabe der vorliegenden Erfindung eine nochmals verbesserte Reckanlage zu schaffen, bei der insbesondere der Energiebedarf für die Erwärmung im Reckofen einerseits möglichst gering gehalten wird, andererseits aber gleichwohl die notwendigen Behandlungstemperaturen in den einzelnen Behandlungszonen des Ofens erreicht werden können, und dass dabei gleichwohl insbesondere in den Kühlzonen erreicht wird, dass die in den Luftraum in der jeweiligen Behandlungszone des Ofens befindlichen Oligomere nicht oder auf jeden Fall weniger stark abscheiden und kondensieren oder zumindest zu einer deutlichen Reduzierung der sich in einer Behandlungszone oder Behandlungskammer niederschlagenden Kondensatstoffe beitragen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Es muss als ausgesprochen überraschend bewertet werden, dass im Rahmen der Erfindung mit den vorgeschlagenen Maßnahmen gegenüber den herkömmlichen Lösungen deutliche Verbesserungen erzielbar sind.

Im Gegensatz zum Stand der Technik schlägt die erfindungsmäße Lösung vor ein Behandlungsfluid, also in der Regel Luft, in der letzten Behandlungszone zu entnehmen und dieses Behandlungsfluid in zumindest zwei prozesstechnisch vorgelagerte Behandlungszonen des Reckofens einzuführen, und zwar nicht in kaskadierter Form sondern in separater Form.

Mit anderen Worten wird Behandlungsfluid aus einer der letzten oder bevorzugt der letzten Behandlungszone nicht zunächst einer vorletzten Behandlungszone und von dort einer nochmals vorgelagerten Behandlungszone zugeführt, sondern es wird aus der letzten Behandlungszone beispielsweise in Form einer dritten Kühlzone das dort in den Ofen eingeblasene Behandlungsfluid entnommen, d.h. in der Regel abgesaugt, um einen Teil der Volumenmenge dieses Behandlungsfluids beispielsweise der vorletzten Behandlungszone (z. B. in Form einer zweiten Kühlzone) und einem anderen Teil des Volumenstroms des Behandlungsfluids beispielsweise dem Ofeninnenraum einer nochmals vorgelagerten Behandlungszone beispielsweise in Form einer ersten Kühlzone zuzuführen.

Ebenso ist es im Rahmen der Erfindung möglich auch einen dritten oder vierten Anteil usw. des aus der letzten Behandlungszone entnommenen Volumenstromes anteilsmäßig den anderen Behandlungszonen zuzuführen.

Mit anderen Worten ist im Rahmen der Erfindung vorgesehen, dass Luft aus der letzten Zone (beispielsweise der dritten Kühlzone) entnommen wird und auf die davor liegenden Zonen verteilt wird. Zusätzlich kann natürlich auch den vorgelagerten Zonen noch weitere Frischluft zugeführt, d.h. die aus der letzten Behandlungszone entnommene Abluft mit Frischluft vermischt und den anderen Zonen zugeführt werden.

Die den einzelnen Behandlungszonen zugeordneten Luftversorgungseinheiten sind bevorzugt so aufgebaut, dass in der jeweiligen Behandlungszone entsprechend aufbereitete Zuluft sowohl dem Ofenoberraum als auch dem Ofenunterraum getrennt zugeführt werden kann, also sowohl entsprechende Zuluft auf die Folienoberseite wie die Folienunterseite in den jeweiligen Behandlungsraum geblasen werden kann.

Grundsätzlich könnten hier für jede Behandlungszone zwei Luftversorgungseinheiten vorgesehen sein. Bevorzugt wird jedoch jeweils für jede Behandlungszone eine Luftversorgungseinheit verwendet, in der die Zuluft entsprechend aufbereitet und dann dem Ober- und Unterraum im Ofen zugeführt werden kann.

Ferner sind die Luftversorgungseinheiten bevorzugt mit Regelungseinrichtungen zur Einstellung des Volumenstromes (also z. B. die Regelung bezüglich des Anteils an Frischluft und des Anteils der aus der letzten Behandlungszone stammenden Abluft), mit Filtern und/oder mit diversen Temperatursensoren, mit Drucksensoren usw. ausgestattet, um eine optimale Steuerung der gesamten Anlage durchführen zu können.

Aus den erläuterten Vorteilen ist ersichtlich, dass ein wesentlicher Vorteil der Erfindung darin liegt, dass insbesondere aus der letzten Behandlungszone stammende Abluft letztlich als Frischluft für die anderen vorgelagerten Zonen verwendet wird oder verwendet werden kann. Dabei ist allerdings sichergestellt, dass nicht die aus der insbesondere letzten Behandlungszone stammende Abluft zunächst einer vorgelagerten Behandlungszone und von dort einer weiteren nochmals prozesstechnisch vorgelagerten Behandlungszone usw. zugeführt wird, weil dadurch eine zu starke Belastung der Abluft durch Oligomere festzustellen ist.

Ferner hat es sich als besonders vorteilhaft erwiesen, dass die einzelnen Behandlungszonen bezüglich der zur Erzeugung einer entsprechenden Umluft im Innenraum der Behandlungszone benötigten Komponenten "abgespeckt" wurde, d. h. die an sich bisher im Innenraum einer Behandlungszone befindlichen zusätzlichen Komponenten entfernt wurden. Mit anderen Worten weist der erfindungsgemäße Reckofen in den einzelnen Behandlungszonen insbesondere keine Ventilatoren mehr auf.

Zusammenfassend kann festgehalten werden, dass die Erfindung zwei primäre und damit wesentliche Vorteile schafft, nämlich neben der optimalen Luftwiederverwendung bzw. Luftverteilung wird erfindungsgemäß erreicht:
- dass der Heizenergiebedarf gegenüber herkömmlichen Lösungen deutlich reduziert werden kann und
- dass eine deutliche Verbesserung der Verschmutzung im Ofen erzielt wird.

Weitere Vorteile, Einzelheiten und Merkmale der Erfindung ergeben sich aus den anhand von Zeichnungen dargestellten Ausführungsbeispielen. Dabei zeigen im Einzelnen:
- Figur 1:: eine schematische Darstellung eines Grundaufbaus einer aus dem Stand der Technik bekannten Reckanlage;
- Figur 2:: eine schematische Darstellung der aus einer jeweiligen Behandlungszone gesaugten oder ausgeblasenen Abluft und der einer Behandlungszone zugeführten Zuluft oder Frischluft sowie die Weiterleitung von aus der letzten Behandlungszone stammende Abluft zu den anderen Behandlungszonen;
- Figur 3:: eine entsprechende Darstellung zu Figur 2 mit einer gegenüber Figur 2 umgesetzten Abwandlung;
- Figur 4:: eine weitere Abwandlung gegenüber dem Ausführungsbeispiel gemäß Figur 2 bzw. Figur 3;
- Figur 5:: ein schematischer Aufbau einer erfindungsgemäßen Luftversorgungseinheit, wie sie einer einzelnen Behandlungszone zugeordnet ist; und
- Figur 6:: ein schematischer Aufbau einer erfindungsgemäßen Luftversorgungseinheit, wie sie bevorzugt im Rahmen der letzten Behandlungszone verwendet wird.In Figur 1 ist der schematische Aufbau einer erfindungsgemäßen Reckanlage gezeigt, d.h. zumindest eines Teiles einer Reckanlage, soweit die Reckanlage einen entsprechenden Reckofen 1 umfasst.

Dabei ist es bekannt, dass bei der Kunststofffolienherstellung zunächst ein Schmelzfilm über eine Düse (beispielsweise eine Breitschlitzdüse) auf eine Kühlwalze einer Folienabzugsmaschine extrudiert wird, um dann die abgekühlte und zumindest vorverhärtete Schmelze von der Folienabzugsmaschine abzuziehen und dann der eigentlichen Reckeinrichtung zuzuführen, um die Folie dann am Ende der Reckanlage nach Austritt aus der letzten Behandlungszone beispielsweise einer Abzugsstufe mit einer Wickleranordnung zuzuführen.

Bei der Reckanlage kann es sich grundsätzlich um eine Simultanreckanlage handeln, bei der der Kunststofffolienfilm in der eigentlichen Reckzone simultan, also gleichzeitig in Längs- und Querrichtung gereckt wird, oder es kann sich auch um eine sequenzielle Reckanlage handeln, bei der der Kunststofffilm beispielsweise erst in Längsrichtung und dann in Querrichtung (oder umgekehrt) gereckt wird. Bei der Reckanlage kann es sich grundsätzlich aber auch um reine Querreckanlage handeln.

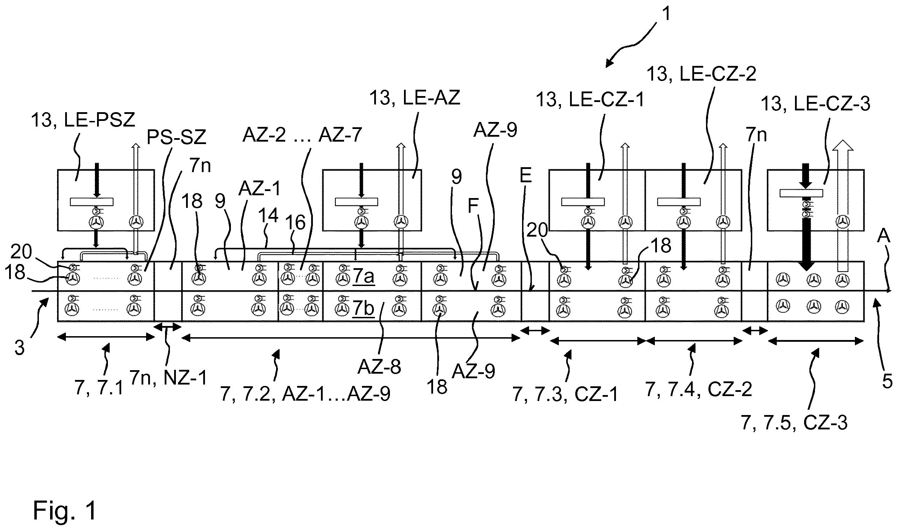

Ein ausreichend ausgehärteter Film wird also letztlich von der Kühlwalze kommend dem Reckofen 1 zugeführt. In Figur 1 ist dabei zum einen die Zuführseite 3 und die Austrittsseite 5 aus dem Reckofen gezeigt, wobei der durch den Reckofen 1 hindurch in Abzugsrichtung A durch den Reckofen 1 hindurch beförderte Film F in Querschnittsdarstellung quer zur Filmebene E ebenfalls eingezeichnet ist.

Im gezeigten Ausführungsbeispiel ist der Reckofen 1 in einer Vielzahl von Behandlungszonen 7 mit zugehörigen Behandlungskammern 9 gezeigt, die in Abzugsrichtung A aufeinander folgend angeordnet sind. Der nachfolgend auch kurz als Ofen 1 bezeichnete Reckofen umfasst also mehrere Behandlungszonen 7, die wiederum zumindest eine, beispielsweise zwei oder allgemein mehrere Behandlungskammern 9 aufweisen kann.

Der in Figur 1 nur beispielhaft wiedergegebene mögliche Aufbau einer derartigen Reckanlage mit zugehörigem Reckofen 1 kann also beispielsweise die folgenden Behandlungszonen 7 umfassen, nämlich von der Zuführseite 3 zur Austrittsseite 5 aufeinander folgend:
- eine Vorheiz- und Streckzone 7 (oder lediglich eine Streckzone 7 ohne zugehörige Vorheizzone), die in Figur 1 zusätzlich mit dem Bezugszeichen PZ-SZ gekennzeichnet ist,
- eine darauf nachfolgende erste neutrale Zone 7n, die in Figur 1 zusätzlich mit dem Bezugszeichen NZ-1 gekennzeichnet ist, wobei in dieser neutralen Zone 7n der Regel keine bestimmte Filmbehandlung stattfindet, so dass in diesem Bereich keine separate Zulufteinrichtung oder Ablufteinrichtung vorgesehen sein muss, gleichwohl aber vorgesehen sein kann eine Behandlungszone 7 in Form einer Annealingzone AZ, also eine spezielle Wärmebehandlungszone des Films nach Beendigung des Reckvorganges, in der auch eine gewisse Relaxation stattfinden kann; Die vorstehend erwähnte Annealingzone AZ kann sich (wie aber auch einzelne oder mehrere oder alle anderen Behandlungszonen 7) in zwei oder in mehrere Behandlungskammern 9 gliedern. Im gezeigten Ausführungsbeispiel umfasst die Annealingzone 7, AZ neun Behandlungskammern 9, die mit den Bezugszeichen AZ-1 bis AZ-9 gekennzeichnet sind, wobei die Behandlungskammern AZ-2 bis AZ-7 nur ausschnittsweise angedeutet sind. Gleichwohl handelt es sich um entsprechend separat gegliederte Annealingkammern 9, die jeweils separate Behandlungskammern 9 darstellen, denen also entweder ein Luftstrom in separater einstellbarer Zusammensetzung mit separat vorwählbarer Temperatur und vorgebbarer Volumenmenge oder wie in Figur 1 angedeutet, üblicherweise ein gemeinsamer Luftstrom über eine gemeinsame Luftversorgungseinheit 13 zuführbar ist, der insoweit für alle Annealingkammern 9 (AZ-1 bis AZ-9) gleichmäßig zusammengesetzt und auf eine gemeinsame Temperatur aufgeheizt ist. Wie allerdings aus der schematischen Darstellung gemäß Fig. 1 zu ersehen ist, ist auch in diesen Behandlungskammern AZ-1 bis AZ-9 eine oder mehrere Luftumwälzeinrichtungen und/oder Heizeinrichtungen vorgesehen, wodurch noch in jeder Annealingzone AZ-1 bis AZ-9 eine an die betreffende Annealingkammer 9 unterschiedlich anpassbare Luftbehandlung und -aufheizung umgesetzt werden kann (ganz allgemein können also die Temperaturen in den Behandlungskammern AZ-1 bis AZ-9 alle unterschiedlich sein und unabhängig von der Temperatur der Zuluft der Luftversorgungseinheit 13 sein. Dabei kann die Anzahl der Annealingkammern unterschiedlich sein); auf die Annealingzone AZ nachfolgend kann wiederum eine neutrale Zone vorgesehen sein, also bei der in Figur 1 gezeigten Anlage eine zweite neutrale Zone NZ-2;

- darauf folgen nunmehr in Abzugsrichtung A der Folie drei weitere Behandlungszonen 7, nämlich drei Kühlzonen CZ-1, CZ-2 und CZ-3;
- auch zwischen den geschilderten Kühlzonen können eine oder mehrere neutrale Zonen vorgesehen sein. Im gezeigten Ausführungsbeispiel ist zwischen der zweiten und der dritten Kühlzone CZ-2 und CZ-3 noch eine dritte neutrale Zone NZ-3 vorgesehen.

Aus der schematischen Darstellung gemäß Figur 1 ist also zu ersehen, dass die neutralen Zonen NZ-1, NZ-2 und NZ-3 in der Tat nur neutrale Zwischenzonen darstellen, denen keine separaten Luftversorgungseinheiten zugeordnet sind. Dabei wird angemerkt, dass Figur 1 nur ein grundsätzliches Beispiel zeigt. Die Recköfen können auch grundsätzlich völlig anders aufgebaut sein, indem sie beispielsweise mehr oder weniger Behandlungszonen 7 auch in Form von Annealingzonen 9 oder neutralen Zonen NZ mit mehr oder weniger Behandlungskammern 9 aufweisen. Begrenzungen gibt es insoweit nicht.

In den anderen Behandlungszonen 7 ist im gezeigten Ausführungsbeispiel gemäß Fig. 1 ebenfalls jeweils eine Luftversorgungseinheit 13 vorgesehen, worüber den einzelnen Behandlungszonen entsprechende Volumenströme an Zuluft einerseits zugeführt und ferner von den einzelnen Behandlungszonen 7 eine entsprechende Volumenmenge an Abluft abgeführt werden können, und zwar gesteuert nicht nur bezüglich des Volumens, sondern auch bezüglich der Temperatur, ggf. Luftzusammensetzung, Druck, Strömungsgeschwindigkeit etc., worauf nachfolgend noch eingegangen wird.

Die einzelnen Luftversorgungseinheiten 13 sind dabei als LE-PSZ, LE-AZ, LE-CZ-1, LE-CZ-2 bzw. LE-CZ-3 abgekürzt, sofern die entsprechende Luftversorgungseinheit 13 der Vorheiz- und Streckzone PZ-SZ, der Annealingzone AZ bzw. den drei Kühlzonen CZ-1, CZ-2, CZ-3 zugeordnet sind.

Dabei können die Luftversorgungseinheiten 13 in den Behandlungszonen 7 so aufgebaut sein, dass letztlich eine entsprechende Verzweigung insoweit vorgesehen ist (wie in Figur 1 schematisch angedeutet ist), dass die einer Behandlungszone 7 und damit einer oder mehreren Behandlungskammern 9 zugeführte Zuluft zum einen in den jeweiligen Behandlungszonen-Oberraum 7a oberhalb des durch den Ofen 1 hindurch geführten Kunststofffilmes F und zum anderen in den Behandlungszonen-Unterraum 7b zugeführt wird, der in der betreffenden Behandlungszone 7 unterhalb der Ebene E des Kunststofffilms F ausgebildet ist. Dabei kann die Zufuhr von der jeweiligen Luftversorgungseinheit 13 über Verzweigungsleitungen 14 beispielsweise unterschiedlichen Kammern 9 zugeführt werden (wie es beispielsweise in Figur 1 bezüglich der Annealingzone AZ gezeigt ist), so dass die von der Luftversorgungseinheit 13 kommende Zuluft den einzelnen Behandlungskammer-Oberräumen 9a oberhalb des durch den Ofen 1 hindurchgeführten Kunststofffilms F und zum anderen in den jeweiligen Behandlungskammer-Unterräumen 9b zugeführt wird. Die Abluft kann über Verzweigungsleitungen 16 und beispielsweise über die der Luftversorgungseinheit 13 zugeordneten Annealingzone AZ abgeführt und/oder weiterverarbeitet werden, worauf später eingegangen wird. Dies alles ermöglicht, dass die betreffenden Luftversorgungseinheiten 13 für die betreffenden Behandlungszonen 7 die Luft entsprechend vortemperieren und/oder aufbereiten können, wobei dann zusätzlich in den einzelnen Behandlungszonen 7 bzw. den Behandlungskammern 9 durch die den einzelnen Behandlungszonen und/oder Behandlungskammern zugeordneten Umluftmodule und/oder Heizer individuell eingestellt werden können. Die entsprechenden Umluftmodule 18 in den Behandlungszonen 7 bzw. Behandlungskammern 9 und die zusätzlich in den Behandlungszonen 7 bzw. Behandlungskammern 9 vorgesehenen Heizer oder Heizeinrichtungen 20 sind in Fig. 1 schematisch angeordnet.

Dabei ist bevorzugt jedem Umluftmodul 18 (beispielsweise in Form eines Ventilators) auch ein der erwähnten Heizer oder Heizeinrichtungen 20 zugeordnet.

In Figur 1 ist dabei ferner dargestellt, dass die Luftversorgungseinheit 13 für die Annealingzonen AZ, also die Luftversorgungseinheit LE-AZ für alle vorgesehenen Annealingzonen AZ-1 bis AZ-9 vorgesehen ist, d.h. die entsprechende Zuluft auf die hier vorgesehenen neun Behandlungszonen über die angedeuteten Zuführ- und/oder Verzweigungsleitungen 14 aufgespalten und die Abluft aus allen Behandlungskammern 9 über eine Summenschaltung und/oder Summenleitung 16 gemeinsam nach draußen und/oder zu der jeweiligen Luftversorgungseinheit 13 abgeführt wird. Aber auch hier können Abweichungen vorgesehen sein, dass zusätzliche Luftversorgungseinheiten 13 für eine oder mehrere der vorgesehenen Annealingzonen installiert sind und/oder beispielsweise die Abluft aus den betreffenden Annealingzonen separat nach außen hin abgeführt werden. Weitere Abhandlungen sind möglich.

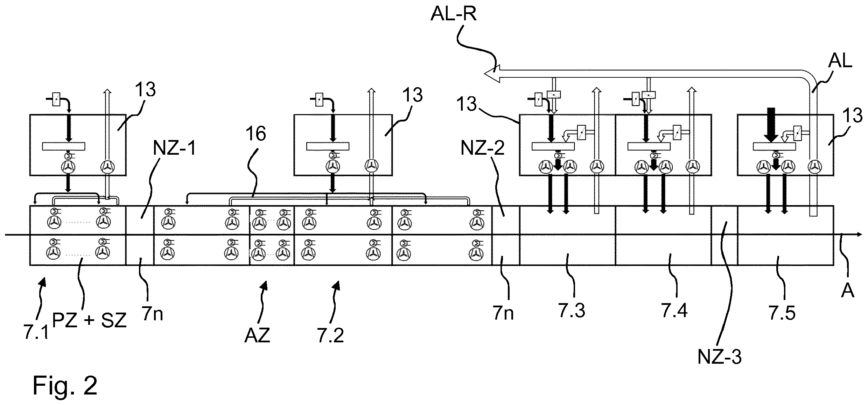

Nachfolgend wird auf Figur 2 Bezug genommen, in der der erfindungsgemäße und damit funktionelle Aufbau der Reckanlage und die Ströme bezüglich der zugeführten Zuluft und der abgeführten Abluft im größeren Detail wiedergegeben sind.

Dabei wird an dieser Stelle schon angemerkt, dass, obgleich von "Umluft", "Zuluft" oder beispielsweise "Abluft" oder auch von einer "Luftversorgungseinheit" etc. gesprochen wird, unter dem Begriff "Luft" alle gasförmigen Fluide verstanden wird, die im Rahmen einer derartigen Reckanlage als umströmbares Fluid eingesetzt werden können. Es kann sich also hierbei um gasförmige Fluide und Medien handeln, die andere Zusatzstoffe und Komponenten als Luft beinhalten oder auch aus anderen Gasen bestehen oder aus anderen Gasen zusammengesetzt sind, die gemeinhin nicht unter dem Oberbegriff "Luft" subsumiert werden.

In Figur 2 ist nur beispielhaft in Übereinstimmung zu Figur 1 angedeutet, dass abgesehen von den drei neutralen Zonen NZ-1 bis NZ-3, denen keine Zuluft zugeführt wird und bezüglich derer auch sonst keine separate Folienbehandlungseinrichtung und keine Luftversorgungseinheit 13 zugeordnet ist, insgesamt fünf Behandlungszonen vorgesehen und angedeutet sind, wobei die fünf Behandlungszonen PZ-SZ, AZ, CZ-1, CZ-2 und die letzte Behandlungszone CZ-3 mit den Bezugszeichen 7.1, 7.2, 7.3, 7.4 und 7.5 durchnummeriert sind.

Grundsätzlich ist der Aufbau der einzelnen Behandlungszonen 7 derart, dass das in einer Behandlungszone 7 befindliche Behandlungsmedium (grundsätzlich Luft) nicht dem durch den gesamten Reckofen 1 hindurch geführten Kunststofffilm F folgend von einer Behandlungszone 7 in eine nachfolgende Behandlungszone 7 überströmen soll. Das heißt, dass i.d.R. in jeder Behandlungszone eine Folieneinlassöffnung und eine Folienauslassöffnung vorgesehen ist, die so dimensioniert und/oder so mit einer Luftströmeinrichtung versehen ist, dass beispielsweise bevorzugt eine Art "Luftvorhang" gebildet wird, der ein direktes Umströmen von Luft vom Innenraum einer Behandlungszone in eine nächste Behandlungszone zumindest so weit als möglich verringert. Von daher findet durchaus bis zu einem gewissen Maß ein ungewollter Luftaustausch zwischen den einzelnen Zonen (und zwischen den einzelnen Kammern statt).

Diese Trennung und Abschottung kann beispielsweise noch dadurch verbessert werden, dass zwischen zwei aufeinanderfolgenden Behandlungszonen 7, wie beispielsweise den beiden letzten Behandlungszonen CZ-2 und CZ-3, eine weitere Neutralzone NZ (hier NZ3) vorgesehen ist. Dabei wird rein vorsorglich an dieser Stelle angemerkt, dass grundsätzlich auch hier der Aufbau auch abweichend von den gezeigten Figuren ausgebildet sein kann, indem mehr oder weniger Kühlzonen sowie mehr oder weniger andere Behandlungszonen und/oder Neutralzonen (auch an anderer Position) vorgesehen sein können.

In dieser dritten Kühlzone CZ-3 (letzte Behandlungszone 7.5) findet bevorzugt ein hundertprozentiger Luftaustauschbetrieb statt, das heißt dass die gesamte Luftmenge, die auf den Film F geblasen wird, über die der dritten Kühlzone CZ-3 zugeordneten Luftversorgungseinheit 13 zugeführt wird, während die gesamte Abluft aus diesem letzten Behandlungsofen 15n über eine Ablufteinrichtung vorzugsweise in Form eines Abluftventilators abgesaugt und nach außen aus dem Behandlungsofen 15 herausgeführt wird.

Diese aus der dritten Kühlzone herausgeführte Abluft AL ist am geringsten belastet, das heißt, sie weist den geringsten Anteil an verdampften Folieninhaltsstoffen, in der Regel Oligomere auf. Zudem liegt die Temperatur der aus der letzten Behandlungszone herausgeführten Abluft oberhalb der Temperatur der dieser letzten Zone zugeführten Luft, der sogenannten Zuluft. Denn mit der zugeführten Luft soll der hindurchgeführte Kunststofffilm weiter abgekühlt werden, wobei die vom Kunststofffilm abgegebene Wärme dann zu einer Erwärmung der Umluft und damit der Abluft führt.

Diese am geringsten belastete Abluft wird unter Ausnutzung der durch den Kunststofffilm bewirkten Erwärmung zumindest zwei prozesstechnisch vorgelagerten Behandlungszonen 7 zugeführt (also in entgegengesetzter Richtung zur Abzugsrichtung A des Kunststofffolienfilms F) wie allerdings in Figur 2 dargestellt, nur separat, also getrennt zur vorletzten und vorvorletzten Zone 7.

Die aus der letzten Behandlungszone 7.5 (CZ-3) abgesaugte oder abströmende Abluft wird im gezeigten Ausführungsbeispiel gemäß Figur 2 beispielsweise zu 40 Volumenprozent der vorletzten Behandlungszone 7.4, das heißt der Behandlungszone CZ-2 zugeführt. Diese vorletzte Behandlungszone 7.4 erhält daneben auch noch separate, nicht aus einer anderen Behandlungszone 7 oder Behandlungskammer 9 stammende Frischluft als Zuluft. Die Abluft aus dieser vorletzten Behandlungszone 7.4 wird nach außen hin abgeführt und nicht weiter verwendet. Alternativ ist es allerdings auch möglich, dass die aus dieser Behandlungszone 7.4 abgeführte Abluft oder zumindest ein Teil dieser Abluft wieder in diese Behandlungszone 7.4 zurückgeführt wird.

Das vorstehend beispielhaft genannte Verhältnis der Aufteilung des Volumenstroms von 40 % zu 60 % zwischen der vorletzten Behandlungszone 7.4 (CZ-2) und der vorvorletzten Behandlungszone 7.3 (CZ-1) kann beliebig eingestellt werden. So könnte beispielsweise die vorletzte Behandlungszone 7.4 70 % des Volumenstroms der Abluft aus der letzten Kühlzone CZ-3 erhalten und die vorvorletzte Behandlungszone 7.3 lediglich 30 %. Theoretisch wäre es sogar möglich, einen Volumenanteil keiner Zone zuzuführen, so dass die Summe der einzelnen Volumenströme nicht zwingend 100 % ergeben muss.

Einen anderen Teil der aus der letzten Behandlungszone 7.5 abgezogenen bzw. abgesaugten Abluft wird z.B. mit einem verbleibenden Anteil von 60 % der vorvorletzten Behandlungszone 7.3 zugeführt, das heißt der vorvorletzten Behandlungszone CZ-1.

Allerdings muss nicht zwingend die komplette Abluft zu 100% z.B. auf die vorgelagerten Zonen 7.4 und 7.3 aufgeteilt werden. Es wäre beispielsweise auch möglich, dass 30% der Luft aus der Behandlungszone 7.5 für die Behandlungszone 7.4 und 30% für die Behandlungszone 7.3 verwendet werden und die restlichen 40% als Abluft von der Anlage weg transportiert werden (d.h. nicht wieder verwendet werden).

Aus diesem Grund ist auch in den Figuren 2 bis 4 der große Pfeil oberhalb der Luftvesorgungseinheiten 13, der den aus der letzten Behandlungskammer 7.5 stammenden Volumenstrom AL andeutet, fortgeführt und mit AL-R bezeichnet. Im vorstehend erläuterten Beispiel bedeutet dies, dass dem Pfeil AL-R entsprechend ein Restanteil AL-R von z.B. 40% des aus der letzten Behandlungskammer 7.5 abgezogenen Volumenstroms AL als nicht rückgeführte Abluft aus der Anlage herausgeführt wird. Entsprechendes oder Vergleichbares ist auch bei allen anderen Ausführungsbeispielen möglich.

Im Rahmen der Erfindung ist es also möglich die aus der letzten Behandlungszone 7.5 stammende Abluft (100% Volumenstrom) in einem beliebigen Verhältnis der vorletzten und der letzten Behandlungszone 7.4 und 7.3 oder allgemein zumindest zwei vorgelagerten Behandlungszonen zum einen zuzuführen und zum anderen einen beliebigen verbleibenden Anteil an Abluft aus der Anlage herauszuführen. In einem Anwendungsfall kann der grundsätzlich aus der Anlage herausführbare Restanteil AL-R auch auf 0% beschränkt sein, wenn nämlich die 100% Abluft aus der letzten Behandlungszone 7.5 ohne Herausführung eine Restanteils AL-R aus der Anlage nur zumindest zwei vorgelagerten Behandlungszonen und damit den zugeordneten Luftversorgungseinheiten in einem beliebigen Verhältnis zugeführt wird wird.

Die anderen Behandlungszonen 7.1 und 7.2 erhalten separat vom Gebäudeinnenraum, in der die Anlage steht, oder von außerhalb des Gebäudes über Zuführleitungen zugeführte Frisch- oder Zuluft, wobei die Abluft von diesen Behandlungszonen 7.1 und 7.2 nach außen hin, vorzugsweise außerhalb des Anlagengebäudes, abgeführt wird.

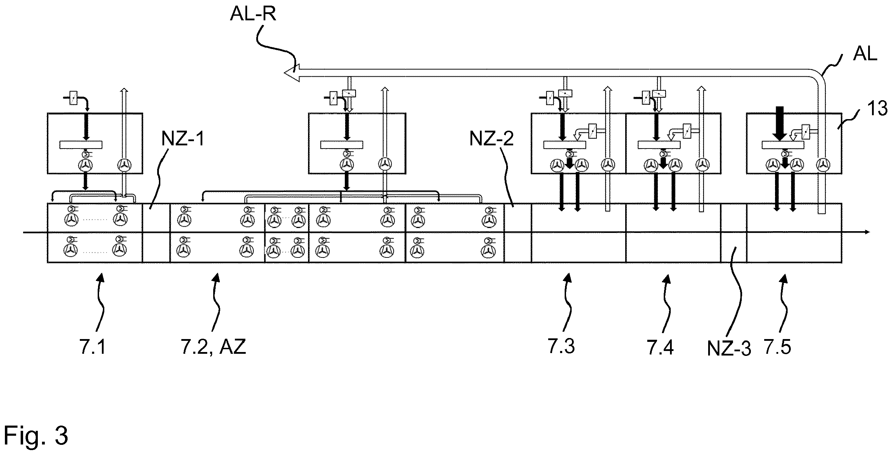

Bei dem Ausführungsbeispiel gemäß Figur 3 ist abweichend zu Figur 2 angedeutet, dass beispielsweise eine weitere vorgelagerte Behandlungszone einen Teil-Volumenstrom der aus der letzten Behandlungszone 7.5 stammenden Abluft erhält, hier also die Volumenströme der aus der letzten Behandlungszone 7.5 stammenden Abluft auf drei Behandlungszonen 7 aufgeteilt wird, wobei das Teilungsverhältnis in den entsprechenden Luftversorgungseinheiten 13 eingestellt werden kann.

Dieser dritte, mit Abluft aus der letzten Behandlungszone versorgte Behandlungszone 7.2 kann dabei beispielsweise die Annealingzone AZ sein.

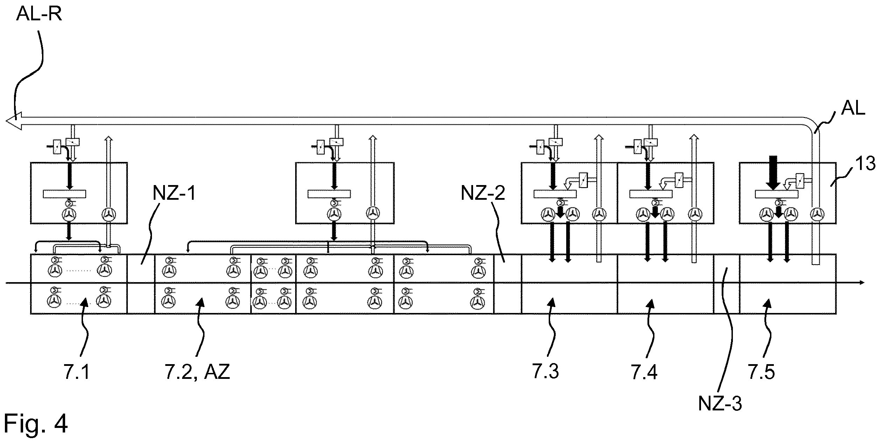

Ferner könnten weitere vorgelagerte Behandlungsöfen zusätzlich oder alternativ mit Abluft versorgt werden, wobei im Extremfall sogar alle vorgelagerten Behandlungszonen 8 einen Anteil der aus der letzten Behandlungszone 9 stammenden Abluft zugeteilt bekommen könnten, wie dies schematisch in Figur 4 angedeutet ist.

Möglich ist grundsätzlich auch, dass zwei oder mehrere vorgelagerte Behandlungszonen aus der Letzten Behandlungszone mit Abluft versorgt werden, wobei zumindest eine dazwischenliegende und damit vorgelagerte Behandlungszone ausgelassen wird. Mit anderen Worten kann z.B. Abluft aus der letzten Behandlungszone 7.5 den Behandlungszonen 7.4 und 7.2 zugeführt werden, nicht aber der dazwischen liegenden Behandlungszone 7.3. Beschränkungen bestehen insoweit nicht.

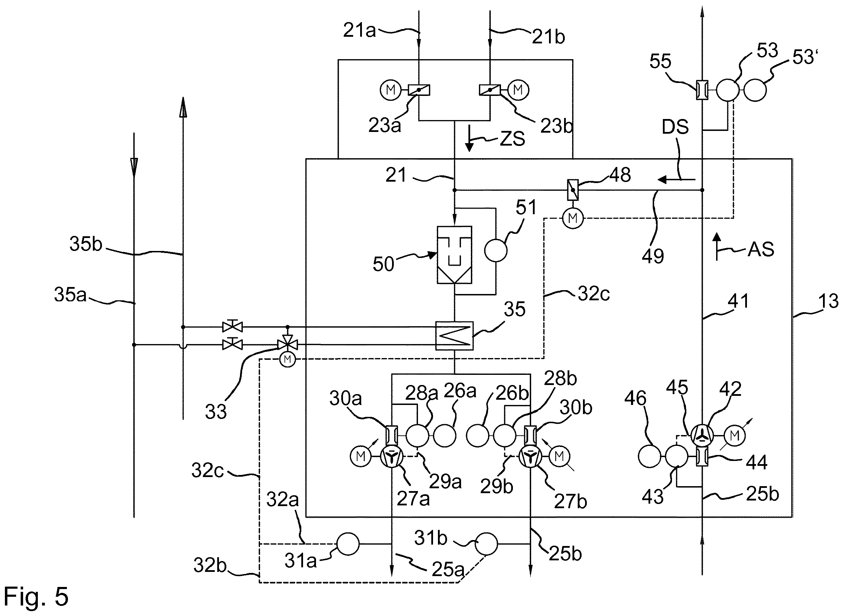

Nachfolgend wird auf Figur 5 Bezug genommen, in der nur beispielhaft der Aufbau einer Luftversorgungseinheit 13 erörtert ist.

Die in Figur 5 gezeigte Luftversorgungseinheit 13 weist also bevorzugt folgenden Grundaufbau auf:
Vorgesehen ist eine Zuluftleitung 21, worüber Luft einer darüber zugeordneten Behandlungszone 7 zugeführt werden kann.

Diese Zuführleitung 21 weist eingangsseitig Zweigleitungen 21a und 21b auf. An der einen Zweigleitung 21a wird reine Frischluft zugeführt, also unbelastete Luft, die aus keiner anderen Behandlungszone 7 und auch nicht aus der gleichen Behandlungszone 7 stammt, dem die Zuluft zugeführt werden soll.

An der zweiten Zweigleitung 21b kann Abluft aus der letzten Behandlungszone 7.5, also aus der letzten Behandlungszone 7.5, zugeführt werden, die im gezeigten Ausführungsbeispiel eine Kühlzone, nämlich die letzte Kühlzone CZ-3 darstellt.

In den beiden Zweigleitungen 21a und 21b sind bevorzugt je eine über je einen Motor M antreibbare Ventilsteuerung 23a bzw. 23b vorgesehen, die der Einstellung des Mischverhältnisses zwischen der reinen Frischluft aus der Umgebung und der Ablauft aus der dritten Kühlzone CZ-3 dient. Die Ventilsteuerung 23a bzw. 23b besteht beispielsweise aus einer Jalousieklappen-Steuerung. Die zugehörigen Jalousieklappen können dabei in einem Durchlassverhältnis in einem Bereich von 0 % bis 100 % Öffnungswinkel eingestellt werden. Sie sind bevorzugt gegenläufig gekoppelt. Das heißt beim Öffnen der beispielsweise in der Frischluftleitung zugeschalteten Klappe wird die in der Abluft-Zweigleitung 21b geschaltete Klappe in entsprechendem Verhältnis geschlossen, so dass der gesamte Volumenstrom stets gleich bleibt, also bei 100 % verbleibt. Abweichend davon ist es auch möglich, dass über die Zweigleitung 21a zugeführte Frischluft und/oder über die Zweigleitung 21b zugeführte Abluft aus der letzten Behandlungszone 7.5, d.h. der letzten Kühlzone CZ-3 zusammen mit Luft aus der jeweiligen Behandlungszone vermengt wird, so dass dadurch die 100 % des Volumenstroms erreicht wird.

Die Klappensteuerung kann dabei neben den Klappen jeweils einen die Klappen ansteuernden Motor M mit der zugehörigen Ansteuereinheit umfassen.

Der im entsprechenden Mischungsverhältnis eingestellte Luftstrom wird also durch die Zuluftleitung 21 durch die Luftversorgungseinheit 13 hindurchgeführt, um dann letztlich auf zwei Zweigleitungen 25a, 25b aufgespalten zu werden, üblicherweise im Verhältnis 50 % bzw. 50 %. Über diese beiden Zweigleitungen werden zwei gleich große Volumenströme einmal dem Behandlungszonen-Oberraum 7a und zum anderen dem Behandlungszonen-Unterraum 7b zugeführt, und zwar jeweils bezüglich der gleichen Behandlungszone 7.

Für die Weiterleitung der Zuluft sind entsprechende Ventilatoren, sogenannte (über je einen Motor M antreibbare) Zuluftventilatoren 27a und 27b, vorgesehen, die in jeder der beiden Zuluft-Zweigleitungen 25a, 25b integriert sind. Anstelle dessen könnte auch ein Zuluftventilator oder ein zusätzlicher Zuluftventilator 27 auch noch in der gemeinsamen Zuluftleitung 21 angeordnet sein.

Ferner ist eine Massen- oder Volumenstrommessung für die Zuluft vorgesehen, bevorzugt nicht in der gemeinsamen Zuluftleitung 21 sondern in den beiden Zuluft-Zweigleitungen 25a und 25b. Diese Massenstrommesseinrichtungen 28a und 28b dienen der Messung und Regelung der durch die Zuluftventilatoren geförderten Massen- und Volumenströme. Die gewünschten Zuluftvolumenströme können dabei in einem Anlagen-Bedienprogramm eingestellt werden. Durch Regelung der Ventilatordrehzahlen werden die eingestellten Volumenströme konstant gehalten.

Die entsprechende Steuerleitung der Massenstromeinrichtung 28a, 28b zu den jeweils der jeweiligen Zweigleitung 25a, 25b zugeordneten Zuluftventilatoren 27a und 27b sind mit 29a und 29b bezeichnet und in Figur 5 strichliert eingezeichnet.

In Figur 5 ist dabei ferner noch jeweils ein Temperatursensor 26a und 26b eingezeichnet, der der jeweiligen Massestromeinrichtung 28a, 28b zugeordnet ist.

Um die Massenstrommessungen optimal durchführen zu können, ist die jeweilige Massenstrommesseinrichtung 28a, 28b einem Drosselabschnitt 30a bzw. 30b zugeordnet. Wie aus den Zeichnungen auch zu ersehen ist, sind in der Zulauf-Leitung 21 bevorzugt der eigentlichen Behandlungszone 7 möglichst naheliegend Temperatursensoren 31a bzw. 31b vorgesehen, worüber in den Zuluft-Zweigleitungen 25a, 25b unmittelbar vor Eintritt der Zuluft in die angeordnete Zone 7 die Zulufttemperatur nicht nur gemessen, sondern darüber letztlich auch über einen Regelkreis rückgeführt und auch eingestellt werden kann. Mit anderen Worten sind diese Sensoren unmittelbar vor Eintritt der Zuluft in die zugehörige Behandlungszone 7 montiert. Dabei misst der Temperatursensor 31a die Zuluft für die im Behandlungszonen-Oberraum 7a vorgesehenen Luftaustrittsdüsen, wohingegen der Temperatursensor 31b die Temperatur für die Zuluft misst, die dem Behandlungszonen-Unterraum 7b zugeführt wird.

In dem erwähnten Anlagen-Bedienprogramm wird dabei nur der Mittelwert der beiden Temperaturwerte auf der Betreiberoberfläche angezeigt. Auch die Heizleistungsregelung erfolgt vorzugsweise auf einem Mittelwert.

Möglich sind aber auch andere Varianten bezüglich einer gewünschten Änderung der Zulufttemperatursteuerung. So ist es auch möglich, die Zulufttemperatur nicht über die Heizleistung am Heizregister zu regeln, sondern durch die Klappenstellungen der Bypassklappe 48, auf die später noch eingegangen wird.

Die entsprechenden Steuerleitungen 32a, 32b von den Sensoren 31a und 31b sind in Figur 5 ebenfalls strichliert angedeutet. Hierüber wird letztlich ein Endventil 33 angesteuert, welches über einen Motor M einen entsprechenden Wärmetauscher 35 in der gemeinsamen Zuluftleitung 21 ansteuert. In dem Wärmetauscher kann ein Aufwärmfluid beispielsweise umströmen, welches bei 300°C in den Wärmetauscher zuströmt und mit beispielsweise 280°C abströmt, wobei der Temperaturdifferenz entsprechend beispielsweise eine Energiemenge von 150 kW an die durch die gemeinsame Zuluft-Leitung 21 strömende Zuluft abgegeben wird.

Bei einem derartigen Aufbau kann beispielsweise Zuluft in dem eingestellten Verhältnis zwischen Frischluft und aus der letzten Behandlungszone stammenden Abluft einer bestimmten anderen Behandlungszone zugeführt werden, und zwar beispielsweise in einer Menge von 15.000 m³/h. Die Zuluft kann beispielsweise auf eine Temperatur zwischen 60°C und 170°C eingestellt werden. Dies entspricht einer Masse von 23.900 bis 31.800 kg/h bei einem Druck von 1.500 Pa.

Schließlich ist bevorzugt innerhalb der gleichen Luftversorgungseinheit 13 eine entsprechende Abluftleitung 41 vorgesehen, die im Gegensinn zur Zuluft-Strömungsrichtung ZS in entgegengesetzter Abluft-Strömungsrichtung AS durchströmt wird, da hierüber aus einem Behandlungsofen die entsprechende Abluft abgeführt wird.

Ferner ist eine Abluftleitung 41 vorgesehen, aus der die Abluft innerhalb einer Behandlungskammer 9 oder einer Behandlungszone 7 gemeinsam abgesaugt wird, also sowohl bezüglich des Behandlungszonen-Oberraums 7a und des Behandlungszonen-Unterraums 7b. Von daher ist es hier nicht zwingend notwendig, dass zwei getrennte Leitungen als Absaugleitungen vorgesehen sind, die zum einen mit dem Behandlungszonen-Oberraum 7a und zum anderen mit dem Behandlungszonen-Unterraum 7b verbunden sind.

In der in Figur 5 gezeigten Absaugleitung 41 ist ferner ein durch einen Motor M angetriebener Ablaufventilator 42 angeordnet, um die Abluft durch die Absaugleitung 41 weiterhin durchzubewegen.

In Absaugrichtung AS dem Abluftventilator 42 vorgeschaltet ist wiederum eine Massenstrommesseinrichtung 43. Hierüber kann der durch den Abluftventilator geförderte Massenstrom gemessen und letztlich geregelt werden. Der Abluftmassenstrom soll dabei der Summe der beiden Zuluftmassenströme entsprechen. Die kann die Regelung der Drehzahl des Abluftventilators erreicht werden. In dem erwähnten Anlagen-Bedienprogramm kann dabei ein Offset-Wert eingegeben werden, in dem bewusst mehr oder weniger Abluft angesaugt werden soll.

Die Massenstrommesseinrichtung 43 ist dabei wiederum dem Leitungsabschnitt 41 mit einer Drossel 44 zugeordnet. Die Steuerleitung 45 von der Massenstrommesseinrichtung 43 zur Veränderung des Drehzahlgebers für den Abluftventilator 42 ist strichliert eingezeichnet. Auch in diesem Fall umfasst die Massenstrommesseinrichtung 43 die Düse 44 (Drossel) und einen Differenzdrucksensor und den Temperaturfühler 46.

Ferner ist eine Verbindungsleitung 49 vorgesehen, in welcher die betreffende Klappe oder Klappensteuerung 48 beispielsweise in Form einer Jalousieklappe geschaltet ist, und dort über einen ansteuerbaren Motor betätigt werden kann.

Diese Verbindungsleitung 49 ist in Durchstromrichtung DS, also von der Abflussleitung 41 kommend (und dabei dem Absaugventilator 42 nachgeordnet) in Richtung Zuführleitung 21 direkt mit der Zuführleitung 21 gekoppelt, die dann über einen Filter 50 zum Wärmetauscher 35 verläuft. Über diesen Filter 50 kann bei Bedarf eine Reinigung auch oder eine gewisse Reinigung der zugeführten Zuluft vorgenommen werden, also Sublimationsstoffe und Oligomere zumindest teilweise herausgefiltert werden.

In dieser erwähnten Verbindungsleitung 49 ist also in Durchströmrichtung DS unmittelbar der Abströmleitung 41 nachgeordnet eine Jalousieklappeneinrichtung 48 vorgesehen, worüber die Abluftmenge eingestellt werden kann, die nicht nach außen hin abgegeben sondern zusätzlich wieder in das gleiche System eingespeist werden soll. Mit anderen Worten wird also der über die Abluftleitung 41 aus einer Behandlungszone einströmende und über die Massen- oder Volumenstrommesseinrichtung 43 gemessene Volumenstrom verzweigt abgegeben. Sofern nicht der gesamte aus einer Behandlungszone abgesaugte Volumenstrom nach außen hin abgegeben werden soll, kann die Einstellung (mittels der an der Absaugleitung 41 ausgangsseitig vorgesehenen Volumenmesseinrichtung, worüber ein die Durchflussmenge begrenzende Drossel 55 angesteuert werden kann) wie erläutert verzweigt derart vorgenommen werden, dass nur ein Anteil des aus einer Behandlungszone erhaltenen Volumenstromes nach außen hin abgegeben wird (wobei dieser Anteil über die Massen- oder Volumenmesseinrichtung 53 gemessen wird) und ein weiterer Anteil wieder in das gleiche System, also in die gleiche Behandlungszone zurückgespeist wird, wobei dieser anteilig rückgespeiste Volumenstrom über die Jalousieklappen-steuerung 48 eingestellt werden kann.

Über einen den Filter 50 parallel geschalteten Druckschalter 51 kann der am Filter auftretende Druckverlust des durchströmenden Gases gemessen werden. An einem zugehörigen Druckschalter selbst kann ein Auslösewert (z. B. 500 Pa) eingestellt werden. Wird dieser Wert erreicht, wird ein Alarmsignal "Filter wechseln" im Anlagen-Bedienprogramm angezeigt. Dann haben die herausgefilterten Substanzen den Filter soweit zugesetzt, dass eine Wechslung notwendig erscheint.

Aus Figur 5 ist also zu ersehen, dass die Luftversorgungseinheit 13 ausgangsseitig die Abluft-Massenstrom-Messeinrichtung 53 (vorzugsweise mit zugeordnetem Temperaturfühler 53') umfasst, mit der der endgültige Volumen-Massenstrom der abgeführten Abluft gemessen werden kann. Auch hier kann im Anlagen-Bedienprogramm wiederum ein Mindestwert eingegeben werden. Beträgt dieser Mindestwert 0 kg/h, so bedeutet dies, dass über die hier von der Abluft- in die Massenstrom-Messeinrichtung 53 angesteuerte und in der Abluftleitung 41 geschaltete Bypassklappe 55 so viel Abluft der Zuluft beigemischt werden kann, wie benötigt wird, um die gewünschte Zulufttemperatur zu erreichen, ohne heizen zu müssen. Wird zum Beispiel 4.000 kg/h eingestellt, wird die Bypassklappe so eingestellt, dass die gewünschte Menge abgeführt wird. Wenn die Wärmemenge der verbleibenden Bypassluftmenge nicht ausreicht, um die gewünschte Zulufttemperatur zu erreichen, wird die fehlende Heizleistung über den Wärmetauscher 35 eingebracht, der über eine Heizleitung 35a z.B. mittels aufgeheiztem Öl versorgt wird, welches über eine Rückleitung 35b wieder zurückfließt.

Dabei wird ergänzend angemerkt, dass primär durch die über die erste Zweigleitung 21a zugeführte Frischluft und durch die über die zweite Zweigleitung 21b aus der letzten Behandlungszone 7.5 zugeführte Abluft sowie durch die über die Verbindungsleitungen 49 aus der gleichen Behandlungskammer stammende Abluft entsprechend dem jeweils zugeführten Anteil letztlich die Temperatur des in die betreffende Behandlungskammer zugeführten Volumenstroms der Luft definiert bzw. bestimmt wird. Sollte die Temperatur für das entsprechende Mischungsverhältnis aus Frischluft, aus der letzten Behandlungskammer stammenden Abluft und aus der gleichen Behandlungskammer stammenden Abluft nicht den optimalen Wert aufweisen, so kann der entsprechende Volumenstrom beispielsweise über die Heizsteuerung (also den Wärmetauscher) 35 entsprechend angehoben oder abgesenkt, also angepasst werden.

Dabei steuert die in der Verbindungsleitung 49 befindliche Jalousieklappe 48 die Luftmenge, welche zurück in die gleiche Behandlungskammer eingebracht werden soll, aus der diese Abluft stammt. Die "Oberhand" der Regelung kommt dabei der Bypassklappensteuerung 55 zu, die festlegt, welcher Anteil des aus einer Behandlungskammer stammenden Volumenstroms (Abluft) letztlich nach außen hin abgeführt und welcher verbleibende Anteil in die gleiche Behandlungskammer wie die Verbindungsleitung 49 zurückgeführt werden soll.

Für das gesamte Zusammenspiel der Luftversorgungseinheit 13 arbeiten dabei die diversen Steuerelemente für die Volumenströme über entsprechende Steuerleitungen oder einen Steuerbus 32c zusammen bzw. wirken zusammen, wobei in Figur 5 lediglich diese Steuerleitungen 32a, 32b, 32c strichliert eingezeichnet sind, ohne zugehörige elektronische Steuerungseinrichtungen (die zur Erzielung einer besseren Übersicht in Figur 5 nicht ergänzend eingezeichnet wurden). Allerdings wird angemerkt, dass entsprechend der Darstellung gemäß Figur 5 alle hierüber über die Steuerleitungen 32a, 32b und 32c in Verbindung stehenden Stellglieder nicht nur gemeinsam und parallel, sondern auch entsprechend einzeln angesteuert werden können. Die Steuerung erfolgt dabei über die in Figur 5 nicht dargestellte Steuerelektronik, d. h. primär über eine hierzu vorgesehene Bedienersoftware. Die in Figur 5 über die Steuerleitung oder den Steuerbus 32a, 32b, 32c miteinander verbundenen Steuerglieder können sich dabei miteinander (beispielsweise unter Zwischenschaltung der elektronischen Steuereinrichtung oder auch durch eine integrierte Intelligenz) "unterhalten". Dadurch kann sichergestellt werden, dass - wenn die Temperatur im Ofen zu niedrig ist (was beispielsweise durch die Temperatursensoren 31a und 31b festgestellt werden könnte) - über die erwähnte Steuerleitung oder den erwähnten Steuerungsbus 32a, 32b, 32c entweder die Heizung 35 angeschaltet oder aber auch die Klappe oder Jalousieklappe 48 entsprechend mehr geschlossen bzw. entsprechend mehr geöffnet wird, um hierdurch die Lufttemperatur zu steuern und so den Heizer nicht unnötig anzuschalten, um so Strom bzw. Öl oder insgesamt Energie zu sparen.. Allerdings kann mittels der Steuerungselemente in Form der Massenstrom-Messeinrichtung 53 und der in diesem Zusammenhang vorgesehenen Bypassklappe 55 eine gewisse Mindestabluftmenge voreingestellt oder vorgeschrieben werden, welch auf jeden Fall aus dem System zu entweichen hat. Der verbleibende Volumenanteil oder Volumenrest kann dann aber wieder in die gleichen Behandlungszone 7 zurückgeführt werden.

Mit einem derartigen Aufbau kann beispielsweise aus einer Behandlungszone 7, das heißt dem Behandlungsofen 15 in der Stunde 23.900 bis 31.800 kg/h an Abluft abgesaugt werden, die beispielsweise zwischen einem Temperaturbereich von 80°C bis 180°C schwankt, und dabei bevorzugt 10°C bis 20°C wärmer ist als die Zuluft. Maximal können beispielsweise 32.000 m³/h bei einem Druck von 1.500 Pa aus dem Ofen abgesaugt werden.

Aus dem geschilderten Aufbau ergibt sich eine Reihe von Vorteilen gegenüber herkömmlichen Lösungen.

So ist zum einen der Aufbau des Behandlungsofens 15 gegenüber herkömmlichen Lösungen geändert worden. Der im Rahmen der Erfindung beschriebenen Behandlungsofen mit den zugehörigen Behandlungszonen (und den darin vorgesehenen Behandlungskammern) zeichnen sich dadurch aus, dass im Behandlungsofen-Innenraum keine Ventilatoren und/oder Heizer und/oder keine Filter vorgesehen sind. Diese Komponenten befinden sich nunmehr ausschließlich in den Luftversorgungseinheiten 13, die den einzelnen Behandlungszonen 7 zugeordnet sind. In den eigentlichen Behandlungszone sind nunmehr lediglich nur noch Luftdüsen, Rücksaugdüsen und/oder angeschlossene Sammelkanäle vorgesehen.

Dadurch wird eine deutliche Verbesserung bezüglich der Reinigung eines Ofens erzielt.

Denn dadurch, dass die im Stand der Technik üblicherweise vorgesehenen mehreren Komponenten im Ofen nunmehr entfallen und in die Luftversorgungseinheiten 13 verlagert wurden, können sich an diesen nicht mehr vorhandenen Komponenten auch keine Oligomere mehr niederschlagen oder daran auskondensieren. Kondensat kann sich also an diesen nicht mehr im Behandlungsraum vorhandenen Komponenten niederschlagen.

Durch die Verlagerung der erwähnten Filter vom Ofen in die Ofenluftversorgungseinheiten und die damit verbundene bessere Zugänglichkeit sowie durch das Zusammenführen auf eine Filterstelle wird der Wartungsaufwand zum Tauschen der Filter gegenüber herkömmlichen Lösungen deutlich reduziert.

Ein weiterer Vorteil in diesem Zusammenhang ist ferner, dass bisher bei herkömmlichen Anlagen in den einzelnen Behandlungsöfen Filter in Sondergrößen verwendet werden mussten. Da die Filter nunmehr in den Luftversorgungseinheiten untergebracht sind, können Standardgrößen für die Filter verwendet werden, wodurch sich die Filterkosten um bis zur Hälfte reduzieren lassen.

Durch die vorliegende Erfindung wird die benötigte Heizenergie zum Betrieb eines Reckofens deutlich verringert. Dabei ist es sogar möglich, insbesondere die erwähnten Kühlzonen rein mit der durch den Film eingebrachten Wärme zu betreiben.

Dabei wird im Rahmen der Erfindung vorgeschlagen, die Abluft bevorzugt lediglich der letzten Behandlungszone 7 (bei der die Abluft am saubersten ist) über einen Bypass in die Zuluft zumindest zweier prozesstechnisch vorgelagerter Behandlungszone oder- Öfen einzuspeisen. Dabei wird der Energiegehalt dieser Teilmenge praktisch wieder vollständig genutzt.

Soweit vorgeschlagen wird, wird aus den Einzelbehandlungszonen Abluft nicht zu 100 % völlig abgegeben sondern kann teilweise auch gesteuert in einen vorwählbaren Volumenanteil in das System rückgeführt werden. Insbesondere bei der Einspeisung von Abluft aus Behandlungszonen mit geringer Schmutzbelastung kann ebenfalls wiederum Energie eingespart werden.

Schließlich wird aber der Schmutzanteil in jeder Behandlungszone reduziert und die Situation verbessert, den Ofen entsprechend reinigen zu können. Zum einen kann im Rahmen der Luftversorgungseinheiten vorgesehen sein, dass insbesondere auch die Abluftleitungen mit einem so großen Durchmesser ausgestattet sind, dass durch diese Vergrößerung der Luftdurchsatzmenge in den einzelnen Behandlungszonen praktisch in allen Kühlzonen ein 100 prozentiger Luftaustauschbetrieb möglich ist.

Durch die Installation eines regelbaren Bypassventils kann dabei bevorzugt ein vorwählbarer Anteil an Abluft einer bestimmten Behandlungszone in die dieser Behandlungszone wieder zugeführten Frischluft zusätzlich eingespeist werden.

Eine Verbesserung ergibt sich ebenfalls dadurch, dass bevorzugt jede Luftversorgungseinheit (13) zwei Zuluftventilatoren aufweist, nämlich einen Zuluftventilator, der dem Behandlungszonen-Oberraum zugeordnet ist und einen Zuluftventilator, der dem Behandlungszonen-Unterraum zugeordnet ist.

Da schließlich die Zuluft nur über Düsen in die Behandlungszonen (und -kammern) eingeführt wird, wird auch eine sogenannte "Kondensatfalle" vermieden (die bei der Vermischung von kalter Frischluft mit warmer, oligomerbeladener Umluft auftritt), da diese Vermischung nicht mehr in den Behandlungszonen, sondern in der jeweiligen Luftversorgungseinheit stattfindet. Durch die Anordnung der Kondensatfalle direkt vor dem Filter werden die Oligomere sofort vom Filter aufgefangen und lagern sich nicht an anderen Bauteilen ab.

Dabei erweist sich die Verwendung von Drosselklappen oder sogenannten Jalousieklappen als besonders günstig, da hierüber das Ansaugverhältnis zischen Frischluft aus der Umgebung und Abluft aus einem Behandlungsofen mit geringer Schmutzbelastung optimal eingestellt werden kann, und zwar manuell oder automatisch und unabhängig durch entsprechende prozesssteuernde Einrichtungen.

Die beschriebene Erfindung ist für unterschiedlichste Reckanlagen zur Herstellung unterschiedlichster Filme wie Dünnfilme, Dickfilme etc. verwendbar. Sie ist auch für die Herstellung und Reckung von Kunststofffilmen geeignet, die aus unterschiedlichen Materialien bestehen, beispielsweise zur Herstellung von PET-Filmen oder BOPET-Filmen (also bei biaxial-orientierten PET-Filmen).

Durch den erfindungsgemäßen Aufbau der Reckanlage lassen sich verschiedene Vorteile realisieren. Diese Vorteile umfassen zum einen die geschilderte optimale Luftwiederverwendung bzw. Luftverteilung, die folgende Verbesserungen zur Folge haben:
1. Reduzierung des Heizenergiebedarfs
2. Verbesserung der Verschmutzung im Ofen

Dabei sind eine oder mehrere der nachfolgenden Aspekte von Bedeutung:
a) die Luft in den Zonen 7 wird komplett aus den Zonen (CZ-1, CZ-2, CZ-3) abgesaugt, und/oder
b) ein Teil dieser Luft wird mit Frischluft und/oder CZ-3-Luft vor dem Filter 50 vereinigt, und/oder
c) diese vereinigte und saubere Luft (dadurch sauber, dass die Verunreinigungen/Oligomere im Filter zurückgehalten werden) wird wieder in die Zonen geblasen. Die benötigte Temperatur für die jeweilige Zone kann durch das Mischungsverhältnis geregelt werden, wodurch entsprechend Heizleistung eingespart werden kann.

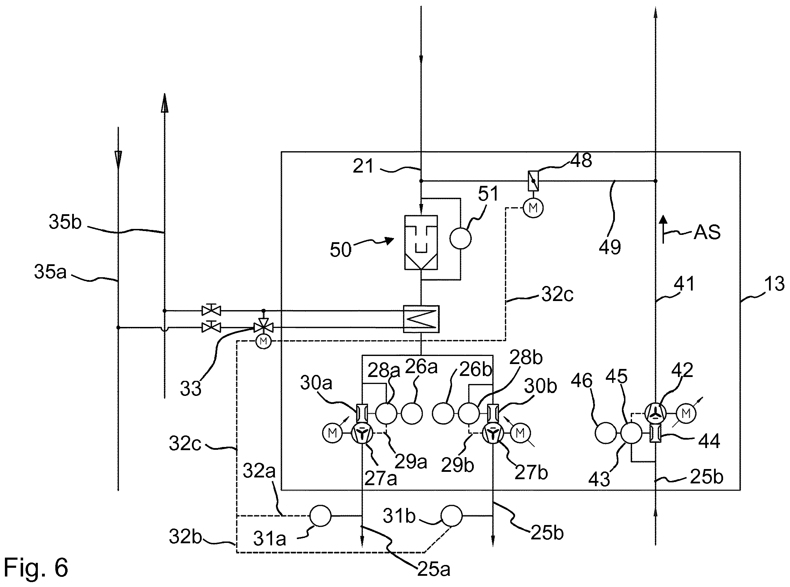

Abschließend wird noch unter Bezugnahme auf Figur 6 darauf verwiesen, dass grundsätzlich die für die letzte Behandlungszone 7.5, d. h. die letzte der drei im gezeigten Ausführungsbeispiel vorgesehenen Kühlzonen CZ-3 grundsätzliche eine Luftversorgungseinheit 13 vorgesehen sein kann, wie sie auch für die anderen Behandlungszonen 7.1 bis 7.4 vorgesehen ist. Da allerdings die letzte Behandlungszone 7.5 keine Abluft aus einer in Abzugsrichtung des Films noch weiter nachfolgenden Behandlungszone erhalten kann, kann die Luftversorgungseinheit 13 für die letzte Behandlungszone 13 gegenüber den Luftversorgungseinheiten 13 für die vorgelagerten Behandlungszonen 7.1 bis 7.4 in einer abgespeckten Version vereinfacht ausgebildet sein.

In Figur 6 sind dabei jene Komponenten gezeigt, wie sie für die letzte Behandlungszone 7.5 in der Luftversorgungseinheit 13 bevorzugt vorgesehen sind. Die dort gezeigten und entsprechenden Bezugszeichen versehenen Komponenten sind jene Komponenten, wie sie auch bei der Erläuterung gemäß Figur 5 vorgesehen sind. Allerding sind einige Komponenten in diesem Ausführungsbeispiel weggelassen, nämlich:
1) Bei der Variante gemäß Figur 6 ist für die letzte Behandlungszone nur eine Zuführleitung 21 für die Zuführung von Frischluft vorgesehen; die in Figur 5 gezeigte Zweigleitung 21b zur Zuführung von Abluft von einer nachfolgenden Behandlungskammer ist weggelassen, da es hinsichtlich der letzten Behandlungszone 7 keine nachfolgende Behandlungszone mehr gibt. Aus den gleichen Gründen sind auch die in Figur 5 gezeigten antreibbaren Ventilsteuerungen 23a, 23b für die Luftversorgungseinheit 13 für die letzte Behandlungskammer 7 nicht notwendig und bei der Variante gemäß Figur 6 weggelassen.
2) Gleichwohl ist auch bei diesem Ausführungsbeispiel für die letzte Behandlungszone 7.5 vorgesehen, dass Abluft aus dieser letzten Behandlungszone 7.5 nicht zu 100% an mehrere vorgelagerte Behandlungszonen abgegeben und/oder als Abluft AL-R aus dem System abgegeben werden muss, sondern dass zumindest ein Anteil dieses Volumenstroms auch die selbe letzte Be handlungszone 7.5 rückgeführt werden kann. Daher ist auch die Verbindungsleitung 49 mit der über einen Motor M ansteuerbaren Jalousieklappe 48 vorgesehen, über die der Anteil des rückgeführten Volumens einer aus der letzten Behandlungskammer stammenden Abluft miteingestellt werden kann, der der gleichen letzten Behandlungskammer 7.5 neben der über die Zuführleitung 21 zugeführten Frischluft zugeführt werden kann.
3) Weggelassen worden ist die Steuerung mittels einer Abluft-Massenstrommesseinrichtung 53 mit zugehörigem Temperaturfühler 53' und der in Figur 5 gezeigten Bypassklappe 55. Bevorzugt ist hier kein Regler für einen Mindestausstoß von Abluft vorgesehen. Der verbleibende Abluftstrom oder Rest des Abluftstroms (wenn ein Teil des Abluftvolumens in die selbe letzte Behandlungskammer über die Verbindungsleitung 49 rückgeführt ist) bestimmt dann jenen Volumenanteil, der den mehreren anderen vorgelagerten Behandlungszonen zugeführt werden kann, sofern nicht - wie gezeigt ist - ein weiterer Restanteil AL-R aus dem gesamten System abgeführt werden soll. Es wird aber angemerkt, dass bei der Absaugleitung 41 eine zusätzliche Volumenstrom-mitregelnde Abluft-Massenstrommesseinrichtung 53 mit zugehörigen Bypassklappen 55 und vorzugsweise zugehörigem Temperaturfühler 53' mit vorgesehen sein kann.

Schließlich wird betont, dass anstelle der erläuterten Komponenten wie z.B. der Jalousieklappen, der Drosseln etc. damit gleichwirkende Steuer- oder Regelelemente verwendet werden können.

## Patentansprüche

1. Folienreckanlage mit folgenden Merkmalen:
- mit einem Reckofen (1), durch den hindurch ein Kunststofffolienfilm (F) von einer Zuführseite (3) durch den Reckofen (1) hindurch bis zu einer Austrittseite (5) in Abzugsrichtung (A) durchführbar ist,
- der Reckofen (1) ist in Abzugsrichtung (A) in aufeinanderfolgende Behandlungszonen (7; NZ) mit oder ohne zugehörigen Behandlungskammern (9) gegliedert,
- der durch einen Behandlungsofen (15) hindurchgeführte Kunststofffolienfilm (F) gliedert Behandlungszonen (7) in einen oberhalb des Kunststofffolienfilms (F) befindlichen Behandlungszonen-Oberraum (7a) und einen unterhalb des Kunststofffolienfilms (F) befindlichen Behandlungszonen-Unterraum (9b),
- der jeweiligen Behandlungszone (7) ist Zuluft zuführbar und daraus Abluft abführbar,
**gekennzeichnet durch die folgenden weiteren Merkmale:**
- das Belüftungssystem für die Behandlungszonen (7) ist derart aufgebaut, dass aus der in Abzugsrichtung (A) des Kunststofffolienfilms (F) letzten Behandlungszone (7; 7.5) abgesaugte Abluft zumindest zwei in Abzugsrichtung (A) des Kunststofffolienfilms (F) vorgelagerten Behandlungszonen (7; 7.4, 7.3) zugeführt wird, wobei ein Volumen-Anteil der aus der letzten Behandlungszone (7; 7.5) abgesaugten Abluft lediglich einer der zumindest beiden Behandlungszonen (7; 7.4) und ein anderer Volumenanteil lediglich einer anderen der zumindest beiden Behandlungszonen (7; 7.3) zugeführt wird.

2. Reckanlage nach Anspruch 1, **dadurch gekennzeichnet, dass** das Belüftungssystem für die Behandlungszonen (7) derart aufgebaut ist, dass die aus der letzten Behandlungszone (7; 7.5) abgesaugte Abluft mehr als zwei vorgelagerten Behandlungszonen (7; 7.4, 7.3, 7.2) zugeführt wird, wobei jede dieser Behandlungszonen (7; 7.4, 7.3, 7.2) Abluft lediglich aus der letzten Behandlungszone (7; 7.5) und gegebenenfalls zusätzliche Abluft regelbar zuführbar ist, die aus der betreffende Behandlungszone (7) abgesaugt und in die gleiche Behandlungszone (7) anteilig zugeführt wird.

3. Reckanlage nach Anspruch 1 oder 2, **dadurch gekennzeichnet, dass** das Belüftungssystem für die Behandlungszonen (7) derart aufgebaut ist, dass die aus einer Behandlungszone (7) abgesaugte Luft entweder nach außen hin abgegeben wird, ohne sie einer anderen Behandlungszone (7) zuzuführen, oder zu einem Anteil mit Zuluft aus der gleichen Behandlungszone (7) gemischt und an die gleiche Behandlungszone (7) zurückgeführt wird.

4. Reckanlage nach Anspruch 3, **dadurch gekennzeichnet, dass** das Massen- oder Volumenverhältnis der einer Behandlungszone (7) zugeführten Zuluft, die zum einen einen Anteil aus Frischluft und zum anderen einen Anteil aus der betreffenden Behandlungszone (7) abgesaugten Abluft umfasst, mittels einer Regeleinrichtung in einem unterschiedlichen Verhältnis von 0 % bis 100 % Frischluft, Restabluft einstellbar ist.

5. Reckanlage nach einem der Ansprüche 1 bis 4, **dadurch gekennzeichnet, dass** zumindest die letzten Behandlungszonen (7) vorzugsweise in Form einer Kühlzone (CZ-3) mit einer Luftversorgungseinheit (13) versehen ist, worüber ein hundertprozentiger Luftaustauschbetrieb durchführbar ist.

6. Reckanlage nach einem der Ansprüche 1 bis 5, **dadurch gekennzeichnet, dass** die Luftversorgungseinheiten (13) zumindest zwei Zuluftventilatoren (27a, 27b) aufweisen, nämlich einen Zuluftventilator (27a), der in der ersten Zuluft-Zweigleitung (25a) und einen Zuluftventilator (27b), der in der zweiten Zuluft-Zweigleitung (25b) angeordnet ist, wobei über die eine Zuluft-Zweigleitung (25a) Zuluft in den Behandlungszonen-Oberraum (7a) und über die zweite Zuluft-Zweigleitung (25b) Zuluft in den Behandlungszonen-Unterraum (7b) zuführbar ist.

7. Reckanlage nach einem der Ansprüche 1 bis 6, **dadurch gekennzeichnet, dass** die Luftversorgungseinheiten (13) eine Misch- und Abluftrückführeinrichtung umfassen, in der ein einer Behandlungszone (7) zuführbare Volumenstrom einstellbar ist, wobei dieser einer betreffenden Behandlungszone (7) zuführbare Volumenstrom so einstellbar ist, dass er entweder zu 100 % Frischluft oder neben einem Anteil Frischluft noch einen weiteren Anteil an Abluft umfasst, der aus der gleichen Behandlungszone (7) gewonnen wurde.

8. Reckanlage nach Anspruch 7, **dadurch gekennzeichnet, dass** zumindest einige Luftversorgungseinheiten (13) eine Verbindungsleitung (49) umfassen, die die Absaugleitungen (41) aus einer betreffenden Behandlungszone (7) mit einer Zuluftleitung (21) in die gleiche Behandlungszone (7) verbindet, in welcher eine steuerbare Bypass-Durchlass- und Sperreinrichtung zur Regelung des Anteils an Abluft geschaltet ist, der der Zuluft beigemischt wird.

9. Reckanlage nach einem Ansprüche 1 bis 8, **dadurch gekennzeichnet, dass** die Luftversorgungseinheiten (13) mit Ausnahme der zumindest einen oder der mehreren als Kühlzonen (CZ-1, CZ-2, CZ-3) wirkenden Behandlungszonen (7) eingangsseitig zwei Zuluft-Zweigleitungen (21a, 21b) umfassen, wobei über die eine Zuluft-Zweigleitung (21a) Frischluft und über die zweite Zuluft-Zweigleitung (21b) Abluft zumindest aus der letzten Behandlungszone (7.5) und/oder der gleichen Behandlungszone (7) zuführbar ist, an der die Zuluft abgegeben wird, vorzugsweise über eine Klappensteuerung, worüber die Volumenströme in den beiden Zuluft-Leitungen (21a, 21b) so zwischen 0 % und 100 % derart umsteuerbar sind, dass die Gesamtmenge an durch die beiden Zweigleitungen (21a, 21b) strömender Zuluft konstant bleibt oder um weniger als 20 %, insbesondere weniger als 10 % oder weniger als 5 % davon abweicht.

10. Reckanlage nach einem der Ansprüche 1 bis 9, **dadurch gekennzeichnet, dass** das Belüftungssystem derart aufgebaut ist, dass Abluft nur aus der in Abzugsrichtung (A) des Kunststofffolienfilms (F) letzten Behandlungszone (7) einer oder mehreren vorgelagerten Behandlungszonen (7) zugeführt wird.

11. Reckanlage nach einem der Ansprüche 1 bis 10, **dadurch gekennzeichnet, dass** die Kühlzonen (CZ-1, CZ-2, CZ-3) teils energieautark betreibbar sind.

12. Reckanlage nach einem der Ansprüche 1 bis 11, **dadurch gekennzeichnet, dass** die Luftversorgungseinheit (13) eine Filtereinrichtung (50) aufweist, über die der Behandlungszone (7) zuführbare Frischluft und/oder beigemischte Abluft zugeführt wird.

13. Reckanlage nach einem der Ansprüche 1 bis 12, **dadurch gekennzeichnet, dass** zumindest eine und vorzugsweise mehrere, insbesondere zumindest die letzte Behandlungszone (7; 7.5) frei von Ventilatoren, Heizern und/ oder Filtern ausgebildet ist bzw. sind.

14. Reckanlage nach einem der Ansprüche 1 bis 13, **dadurch gekennzeichnet, dass** als Abluft- und Zuluft-Strömungseinrichtung in einer Behandlungszone (7) lediglich Zuführdüsen und Auslassöffnungen oder Auslassdüsen vorgesehen sind.

## Claims

1. Film stretching system, comprising the following features:
- comprising a stretching furnace (1) through which a plastics film (F) can be passed from a supply side (3) through the stretching furnace (1) to an outlet side (5) in a withdrawal direction (A),
- the stretching furnace (1) is divided, in the withdrawal direction (A), into successive treatment zones (7; NZ) which comprise or do not comprise associated treatment chambers (9),
- the plastics film (F) passed through a treatment furnace (15) divides treatment zones (7) into a treatment zone upper space (7a) located above the plastics film (F) and a treatment zone lower space (9b) located below the plastics film (F),
- supply air can be supplied to the relevant treatment zone (7) and exhaust air can be removed therefrom,
**characterised by the following further features:**
- the ventilation system for the treatment zones (7) is constructed such that exhaust air extracted from the last treatment zone (7; 7.5) in the withdrawal direction (A) of the plastics film (F) is supplied to at least two treatment zones (7; 7.4; 7.3) arranged upstream in the withdrawal direction (A) of the plastics film (F), a volume fraction of the exhaust air extracted from the last treatment zone (7; 7.5) being supplied to only one of the at least two treatment zones (7; 7.4) and a further volume fraction being supplied to only one other of the at least two treatment zones (7; 7.3).

2. Stretching system according to claim 1, **characterised in that** the ventilation system for the treatment zones (7) is constructed such that the exhaust air extracted from the last treatment zone (7; 7.5) is supplied to more than two upstream treatment zones (7; 7.4, 7.3, 7.2), it being possible to supply each of these treatment zones (7; 7.4, 7.3, 7.2) with exhaust air only from the last treatment zone (7; 7.5) and optionally, in a controllable manner, with additional exhaust air that is extracted from the relevant treatment zone (7) and supplied proportionately to the same treatment zone (7).

3. Stretching system according to either claim 1 or claim 2, **characterised in that** the ventilation system for the treatment zones (7) is constructed such that the air extracted from one treatment zone (7) is either released to the outside without being supplied to another treatment zone (7) or a proportion thereof is mixed with supply air from the same treatment zone (7) and returned to the same treatment zone (7).

4. Stretching system according to claim 3, **characterised in that** the mass or volume ratio of the supply air supplied to a treatment zone (7), which air comprises a proportion of fresh air and a proportion of exhaust air extracted from the relevant treatment zone (7), can be adjusted in a different ratio of 0% to 100% of fresh air and residual exhaust air by means of a control device.

5. Stretching system according to any of claims 1 to 4, **characterised in that** at least the last treatment zones (7), preferably in the form of a cooling zone (CZ-3), are provided with an air supply unit (13) by means of which a one hundred percent air exchange operation can be carried out.

6. Stretching system according to any of claims 1 to 5, **characterised in that** the air supply units (13) have at least two supply air fans (27a, 27b), specifically a supply air fan (27a) which is arranged in the first supply air branch line (25a) and a supply air fan (27b) which is arranged in the second supply air branch line (25b), it being possible to supply supply air into the treatment zone upper space (7a) via one supply air branch line (25a) and to supply supply air into the treatment zone lower space (7b) via the second supply air branch line (25b).

7. Stretching system according to any of claims 1 to 6, **characterised in that** the air supply units (13) comprise a mixing and exhaust air return device in which it is possible to adjust a volumetric flow that can be supplied to a treatment zone (7), it being possible to adjust this volumetric flow that can be supplied to a relevant treatment zone (7) such that it comprises either 100% fresh air or, in addition to a proportion of fresh air, a further proportion of exhaust air that was obtained from the same treatment zone (7).

8. Stretching system according to claim 7, **characterised in that** at least some air supply units (13) comprise a connecting line (49) which connects the extraction lines (41) from a relevant treatment zone (7) to a supply air line (21) into the same treatment zone (7), and in which connecting line a controllable bypass passage and blocking device is connected for controlling the proportion of exhaust air that is mixed with the supply air.

9. Stretching system according to any of claims 1 to 8, **characterised in that** the air supply units (13), with the exception of the at least one or more treatment zones (7) acting as cooling zones (CZ-1, CZ-2, CZ-3), have two supply air branch lines (21a, 21b) on the inlet side, it being possible to supply fresh air via one supply air branch line (21a) and exhaust air via the second supply air branch line (21b) at least from the last treatment zone (7.5) and/or the same treatment zone (7) to which the supply air is released, preferably via a flap control means by means of which the volumetric flows in the two supply air lines (21a, 21b) can be reversed between 0% and 100% such that the total amount of supply air flowing through the two branch lines (21a, 21b) remains constant or deviates therefrom by less than 20%, in particular less than 10% or less than 5%.

10. Stretching system according to any of claims 1 to 9, **characterised in that** the ventilation system is constructed such that exhaust air is supplied to one or more upstream treatment zones (7) only from the last treatment zone (7) in the withdrawal direction (A) of the plastics film (F).

11. Stretching system according to any of claims 1 to 10, **characterised in that** the cooling zones (CZ-1, CZ-2, CZ-3) can be operated in part in an energy self-sufficient manner.

12. Stretching system according to any of claims 1 to 11, **characterised in that** the air supply unit (13) has a filter device (50) via which fresh air and/or mixed exhaust air that can be supplied to the treatment zone (7) is supplied.

13. Stretching system according to any of claims 1 to 12, **characterised in that** at least one treatment zone and preferably a plurality of treatment zones, in particular at least the last treatment zone (7; 7.5), is or are free of fans, heaters and/or filters.

14. Stretching system according to any of claims 1 to 13, **characterised in that** only supply nozzles and outlet openings or outlet nozzles are provided as exhaust air and supply air flow means in a treatment zone (7).

## Revendications

1. Installation d'étirage de film, présentant les éléments suivants :
- un four d'étirage (1) à travers lequel peut passer un film en matière plastique (F) depuis un côté alimentation (3) à travers le four d'étirage (1) jusqu'à un côté sortie (5) en direction d'évacuation (A),
- le four d'étirage (1) est subdivisé en zones de traitement successives (7 ; NZ) avec ou sans chambres de traitement associées (9) dans la direction d'évacuation (A),
- le film en matière plastique (F) passé à travers un four de traitement (15) subdivise des zones de traitement (7) en un espace supérieur de zone de traitement (7a) situé au-dessus du film en matière plastique (F) et en un espace inférieur de zone de traitement (9b) situé au-dessous du film en matière plastique (F),
- la zone de traitement respective (7) peut être alimentée en air d'apport et l'air d'évacuation peut en être évacué,
**caractérisée par** les autres éléments suivants :
- le système de ventilation pour les zones de traitement (7) est construit de telle sorte que l'air d'évacuation aspiré hors de la dernière zone de traitement (7 ; 7.5) en direction d'évacuation (A) du film en matière plastique (F) est amené à au moins deux zones de traitement (7 ; 7.4, 7.3) disposées en amont en direction d'évacuation (A) du film en matière plastique (F), une fraction volumique de l'air aspiré hors de la dernière zone de traitement (7 ; 7.5) étant amenée uniquement à l'une desdites au moins deux zones de traitement (7 ; 7.4) et une autre fraction volumique étant amenée uniquement à une autre desdites au moins deux zones de traitement (7 ; 7.3).

2. Installation d'étirage selon la revendication 1,
**caractérisée en ce que** le système de ventilation pour les zones de traitement (7) est construit de telle sorte que l'air d'évacuation aspiré hors de la dernière zone de traitement (7 ; 7.5) est amené à plus de deux zones de traitement (7 ; 7.4, 7.3, 7. 2) disposées en amont, chacune de ces zones de traitement (7 ; 7.4, 7.3, 7.2) pouvant être alimentée de façon contrôlable en air d'évacuation provenant uniquement de la dernière zone de traitement (7 ; 7.5) et le cas échéant en air d'évacuation supplémentaire qui est aspiré hors de la zone de traitement correspondante (7) et amené proportionnellement jusque dans la même zone de traitement (7).

3. Installation d'étirage selon la revendication 1 ou 2,
**caractérisée en ce que** le système de ventilation pour les zones de traitement (7) est construit de telle sorte que l'air aspiré hors d'une zone de traitement (7) est soit évacué vers l'extérieur sans être amené à une autre zone de traitement (7), soit mélangé en proportion avec l'air d'apport provenant de la même zone de traitement (7) et est ramené à la même zone de traitement (7).

4. Installation d'étirage selon la revendication 3,
**caractérisée en ce que** le rapport de masse ou de volume de l'air d'apport amené à une zone de traitement (7), qui comprend d'une part une proportion d'air frais et d'autre part une proportion d'air d'évacuation aspiré hors de la zone de traitement (7) concernée, peut être réglé au moyen d'un dispositif de régulation dans un rapport différent allant de 0 % à 100 % d'air frais sur air d'évacuation résiduel.

5. Installation d'étirage selon l'une des revendications 1 à 4,
**caractérisée en ce qu'**au moins les dernières zones de traitement (7) sont pourvues, de préférence sous la forme d'une zone de refroidissement (CZ-3), d'une unité d'alimentation en air (13), grâce à laquelle un mode d'échange d'air à 100 % peut être effectué.

6. Installation d'étirage selon l'une des revendications 1 à 5,
**caractérisée en ce que** les unités d'alimentation en air (13) comprennent au moins deux ventilateurs d'alimentation en air (27a, 27b), à savoir un ventilateur d'alimentation en air (27a) disposé dans la première conduite de dérivation d'alimentation en air (25a) et un ventilateur d'alimentation en air (27b) disposé dans la deuxième conduite de dérivation d'alimentation en air (25b), l'une des conduites de dérivation (25a) permettant d'amener de l'air d'apport dans l'espace supérieur de zone de traitement (7a), et la deuxième conduite de dérivation permettant d'amener de l'air d'apport dans l'espace inférieur de zone de traitement (7b).

7. Installation d'étirage selon l'une des revendications 1 à 6,
**caractérisée en ce que** les unités d'alimentation en air (13) comprennent un dispositif de mélange et de retour d'air d'évacuation dans lequel un débit volumique pouvant être amené à une zone de traitement (7) peut être réglé, ce débit volumique pouvant être amené à une zone de traitement (7) concernée étant réglable de telle sorte qu'il comprend soit 100 % d'air frais, soit, en plus d'une proportion d'air frais, une autre proportion d'air d'évacuation obtenue à partir de la même zone de traitement (7).

8. Installation d'étirage selon la revendication 7,
**caractérisée en ce qu'**au moins quelques-unes des unités d'alimentation en air (13) comprennent une conduite de liaison (49) qui relie les conduites d'aspiration (41) provenant d'une zone de traitement (7) concernée à une conduite d'air d'apport (21) dans la même zone de traitement (7), dans laquelle est intégré un dispositif de passage et de blocage à by-pass contrôlable pour réguler la proportion d'air d'évacuation qui est mélangée à l'air d'apport.

9. Installation d'étirage selon une revendication 1 à 8,
**caractérisée en ce que** les unités d'alimentation en air (13), à l'exception d'au moins une ou plusieurs zones de traitement (7) agissant comme zones de refroidissement (CZ-1, CZ-2, CZ-3), comprennent deux conduites de dérivation d'air d'apport (21a, 21b) du côté entrée, une conduite de dérivation d'air d'apport (21a) permettant d'amener de l'air frais et la deuxième conduite de dérivation d'air d'apport (21b) permettant d'amener de l'air d'évacuation provenant au moins de la dernière zone de traitement (7.5) et/ou de la même zone de traitement (7) à laquelle l'air d'évacuation est remis, de préférence par l'intermédiaire d'une commande à clapet permettant de commander les débits volumiques dans les deux conduites d'air d'apport (21a, 21b) entre 0 % et 100 % de telle sorte que la quantité totale de l'air d'apport traversant les deux conduites de dérivation (21a, 21b) reste constante ou en diffère de moins de 20 %, en particulier de moins de 10 % ou de moins de 5 %.

10. Installation d'étirage selon l'une des revendications 1 à 9,
**caractérisée en ce que** le système de ventilation est construit de telle sorte que l'air d'évacuation est amené à une ou à plusieurs zones de traitement (7) situées en amont uniquement à partir de la dernière zone de traitement (7) dans la direction d'évacuation (A) du film en matière plastique (F).

11. Installation d'étirage selon l'une des revendications 1 à 10,
**caractérisée en ce que** les zones de refroidissement (CZ-1, CZ-2, CZ-3) peuvent être exploitées en partie de manière autonome sur le plan énergétique.

12. Installation d'étirage selon l'une des revendications 1 à 11,
**caractérisée en ce que** l'unité d'alimentation en air (13) comporte un dispositif de filtrage (50) par lequel de l'air frais et/ou de l'air d'évacuation mélangé est amené à la zone de traitement (7).

13. Installation d'étirage selon l'une des revendications 1 à 12,
**caractérisée en ce qu'**au moins une et de préférence plusieurs zones, en particulier au moins la dernière zone de traitement (7 ; 7.5) est/sont conçue(s) sans ventilateur, ni chauffage et/ou filtre.

14. Installation d'étirage selon l'une des revendications 1 à 13,
**caractérisée en ce que** seules des buses d'alimentation et des ouvertures de sortie ou des buses de sortie sont prévues comme dispositif d'écoulement de l'air d'évacuation et de l'air d'apport dans une zone de traitement (7).
